# EUROPEAN PATENT APPLICATION

(11) **EP 1 313 013 A2**
(43) Date of publication of application: **21.05.2003**
(21) Application number: 02002567.2
(22) Date of filing: 04.02.2002
(51) Int. Cl.: G06F 9/455

(54) **Method and system of file protection**

(30) Priority: 16.11.2001 JP 2001350933
(71) Applicant: Hitachi, Ltd., Chiyoda-ku, Tokyo 101-8010 (JP)
(72) Inventor: Oshima, Satoshi, Hitachi, Ltd., Intel Prop. Group, Chiyoda-ku, Tokyo 100-8220 (JP); Arai, Toshiaki, Hitachi, Ltd., Intel Prop. Group, Chiyoda-ku, Tokyo 100-8220 (JP); Nagao, Toshihiko, Hitachi, Ltd., Intel Prop. Group, Chiyoda-ku, Tokyo 100-8220 (JP)
(74) Representative: Strehl Schübel-Hopf & Partner

(57) **Abstract**

When a plurality of operating systems (OS) are executed simultaneously on a single computer, a predetermined directory and files in a file system are stored in a file system of a back-end OS (220) by using an inter-OS communication function. After restarting the system, the predetermined directory and files are written back from the back-end OS to a front-end OS (210), thereby maintaining the predetermined files and directory. Furthermore, an updated file system can be partially or entirely reflected to an original stored in the back-end OS (220).

## Description

### BACKGROUND OF THE INVENTION

The present invention relates to a computer system and in particular to file system protection.

A file system of a conventional operating system (OS) normally has a file protection function in which data read, write, and execution are enabled or disabled on file basis. The information of file read, write, and execution enabled/disabled state is called a file attribute. Especially a file system of the multiuser OS may have a function for setting the attribute on file basis for each user and group.

An execution program and setting information related to operation of the OS and application are contained as files in a file system. Among files, an especially important file normally has a read-only attribute so that it cannot be easily rewritten and is given a write-enable attribute when necessary.

A file written into the file system is saved in a secondary storage which is non-volatile even after system end and again can be used after system re-start.

Moreover, when a file is updated, only the state after updating is saved unless the user or application explicitly saves the state prior to the updating.

A conventional file system to which a user having insufficient experience and any users can access has a problem that it is difficult to detect a file written in or a file updated and restore those files to a previous state.

When a file attribute can be set for each of the users such as in a file system of multi user operating system (OS), it is possible to allow nonspecific users and users having insufficient experience to write only into limited files and not allow them to update to the other files, thereby preventing non-preferable write in. However, this method cannot satisfy the requirement for education or the like when it is necessary to allow to temporarily write data and then reset the file content to a previous state.

Moreover, in a file system not having the function to set a file attribute for each user, any user can modify the attribute and it is difficult to protect a file attribute of an important file from user operation.

As a method to solve such a problem, there is used a back-up method for saving a state at a certain moment of the system. However, this back-up method requires a lot of time and processing for restoring the file which has been backed-up. Accordingly, in a large-scale system, it is not practical to back-up all the data and restore them each time.

### SUMMARY OF THE INVENTION

It is therefore an object of the present invention to provide a method and system in which when simultaneously executing a plurality of operating systems (OS) on a single computer, a first OS (back end OS) has a file system on a non-volatile secondary storage and after start, copies a second OS (front end OS) created in the self file system and saved in the non-volatile storage, onto a volatile storage. The back-end OS uses the file system copied on the volatile storage so as to start the front-end OS and uses the file system for the subsequent file operation.

It is assumed that interface such as a keyboard, a mouse, a display are all provided on the side of the front-end OS.

With this configuration, all the file operations executed by the user are executed to the file system on the volatile storage. The file system on the volatile storage is discarded when the power switch is turned off and when the system is reset, and after restart, the file system is copied from the back-end OS to the front-end OS. Accordingly, only by system restart, the front-end OS used by the user can restore its file system to a file system state of the back-end OS stored in the back-end OS.

Furthermore, according to the present invention, when a file system updated is saved, the updated content is not discarded by the system re-start, which is realized by the following two methods.

In the first method, a particular directory and file in the file system are saved in the file system of the back-end OS by using the communication function between the OS's. After the system is restarted, the particular directory and file are written back to the front-end OS, thereby saving the update content of the particular file and directory.

In the second method, the updated file system is partially or entirely reflected to the original stored in the back-end OS side.

Other objects, features and advantages of the invention will become apparent from the following description of the embodiments of the invention taken in conjunction with the accompanying drawings.

### BRIEF DESCRIPTION OF THE DRAWINGS

Fig. 1 shows a computer hardware configuration.
Fig. 2 shows a computer system configuration.
Fig. 3 shows an internal configuration of a main memory.
Fig. 4 shows an internal configuration of an external storage.
Fig. 5 shows a system configuration upon start.
Fig. 6 shows a start procedure.
Fig. 7 shows an example of file storage when an external computer is provided.
Fig. 8 shows an example of storing a file in the back-end OS file system via a communication device.
Fig. 9 shows an example of storing a file in the back-end OS file system via a multi-OS organizer.

### DESCRIPTION OF THE EMBODIMENTS

Description will now be directed to an embodiment of the present invention with reference to the attached drawings.

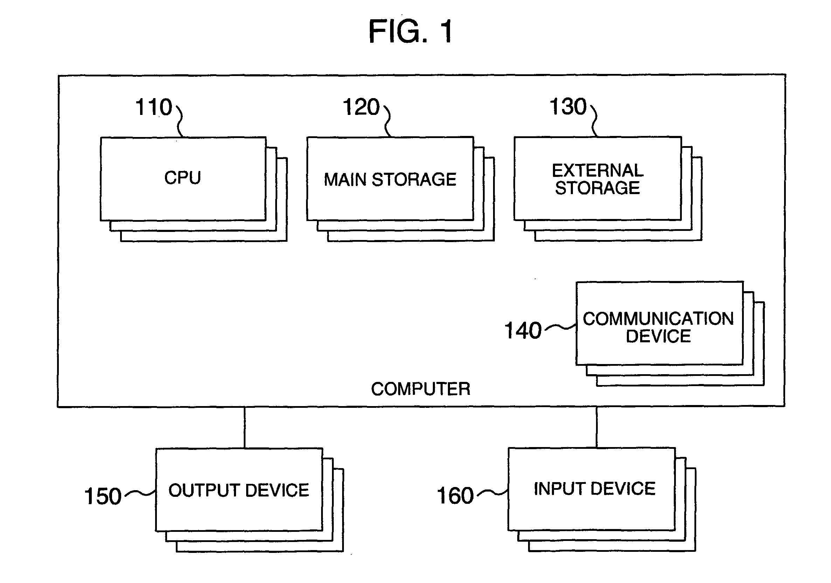

Fig. 1 shows configuration of a computer 100 used in the embodiment of the present invention.

The computer 100 includes processors 110, main memories 120, external storages 130, communication devices 140, output devices 150, and input devices 160. A main memory 120 has a high speed but is expensive and the storage content is lost when the power is cut off (volatile). An external storage 130 has a lower speed as compared to the main memory 120 but is cheaper and the storage content is not lost when power is cut off (non-volatile).

The present invention uses a multi-OS organization in which a plurality of operating systems (OS) are simultaneously executed.

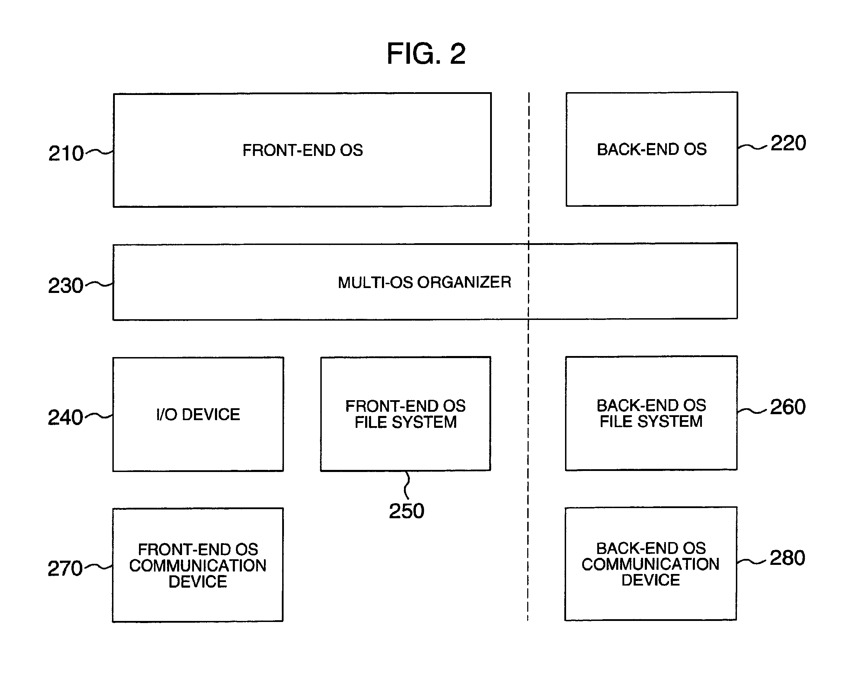

Fig. 2 is a conceptual figure showing theoretical configuration of the computer according to the present invention.

The multi-OS organizer 230 as software realizing the multi-OS has following features.
(1) By the multi-OS organizer 230, the front-end OS 210 and the back-end OS 220 are simultaneously executed. The multi-OS organizer 230 has functions (a main memory dividing function, a front-end OS file system copying function, and the like) required for simultaneously executing the two OS' s.
(2) Each of the front-end OS 210 and the back-end OS 220 has an independent file system and a communication device. Moreover, the front-end OS 210 controls an I/O device.
(3) The multi-OS organizer 230 provides an inter-OS communication function between the front-end OS 210 and the back-end OS 220.

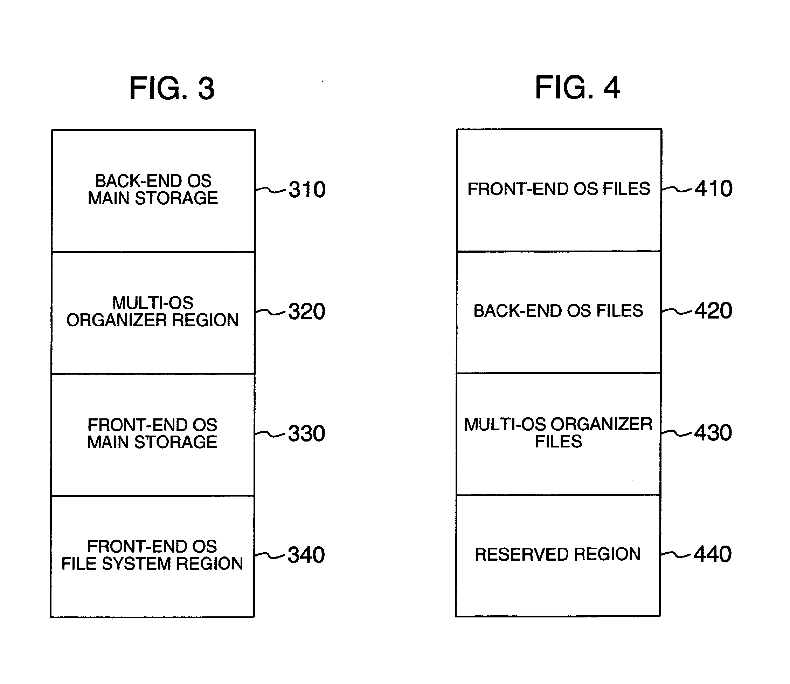

Fig. 3 shows the main memory group 120 on the computer 100 divided into four regions by the multi-OS organizer 230.

The first region is a back-end OS main memory region 310. This region is used as a main memory for operation of the back-end OS.

The second region is a multi-OS organizer region 320. The multi-OS organizer uses this region for realizing the multi-OS organization. Moreover, the inter-OS communication function is also provided by using this region.

The third region is a front-end OS main memory region 330. This region is used as a main memory for operation of the front-end OS.

The fourth region is a front-end OS file system region 340. The file system is created usually in an external storage. However, in this invention, the front-end OS file system is created in the front-end OS file system region 340 of the main memories 120 and the front-end OS is started from the fourth region.

The back-end OS file system 260 is provided in the external storage 130 of the computer 100.

Since such configuration is used, upon system start, only the file system for the back-end OS 220 is stored while the file system of the front-end OS created in the main memory 120 is in volatile state (the content is reset when the power is cut off).

Fig. 4 shows an internal configuration of the back-end OS file system 260.

The front-end OS file system 260 includes: multi-OS organizer files 430 as files required for operation of the multi-OS organizer 230 and back-end OS files 420 as files required for operation of the back-end OS 220.

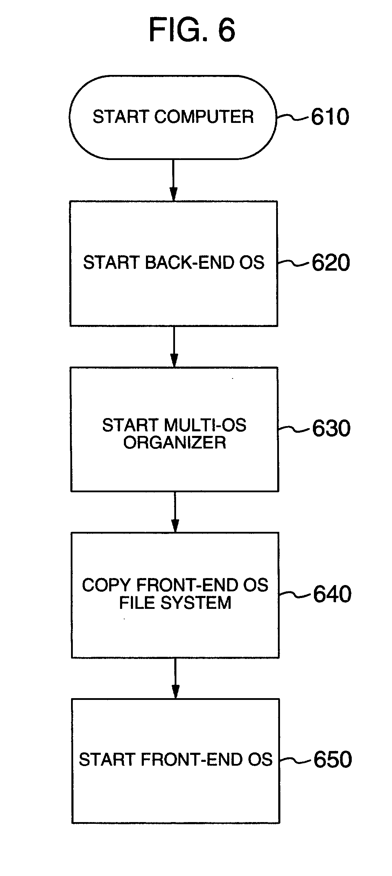

Next, referring to Fig. 6, explanation will be given on a start procedure of the computer system according to the present invention.

The computer system of the present invention is started according to the procedure shown in Fig. 6. Firstly, the computer is started in step 610. Subsequently, in step 620, the back-end OS is started. Next, in step 630, the multi-OS organizer 230 is started. Then, in step 640, the front-end OS file system is copied. Lastly, in step 650, the front-end OS is started.

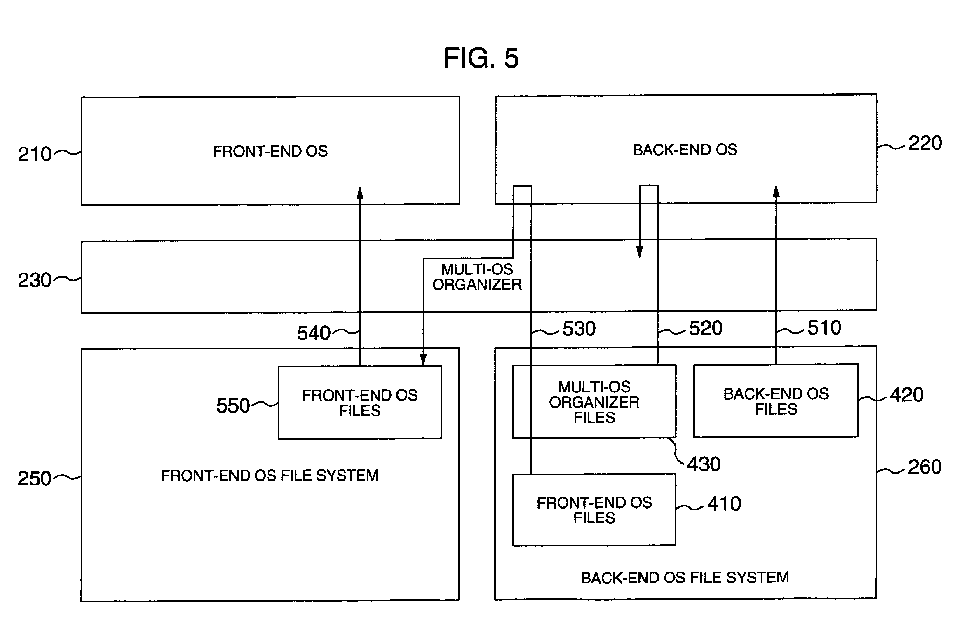

The aforementioned procedure will be detailed with reference to Fig. 5.

After the computer 100 is started in step 610, in step 620, the computer 100 starts the back-end OS 220 among the back-end OS files 420 in the back-end OS file system 260 arranged in the external storage 130. (510 in Fig. 5)

Subsequently, in step 630, the back-end OS 220 starts the multi-OS organizer 230 among the multi-OS organizer files 430 arranged in its file system 260 (520 in Fig. 5). Here, the multi-OS organizer 230 divides the main memory 120 into the regions shown in Fig. 3.

Then, in step 640, the back-end OS 220 copies all the front-end OS files 410 arranged in the back-end OS file system 260 onto the front-end OS file system region 340 of the main memory 120 by using the multi-OS organizer 230 (530 in Fig. 5). The front-end OS file system region 340 which is in the main memory 120 has been initialized when the computer 100 is started.

Lastly, in step 650, the multi-OS organizer 230 starts the front-end OS 210 by using the front-end OS files 550 copied to the front-end OS file system 250. (540 in Fig. 5).

After started, the file operation executed by the front-end OS 210 is executed to the front-end OS file system 250 on the main memory 120, without affecting the front-end OS files 810 of the back-end OS file system 260. Thus, accordingly, in the computer system configured by the method of the present invention, the front-end OS 210 can be started from a predetermined file system state and file operation executed to the front-end OS file system 250 after starting the front-end OS 210 is volatile (reset) after system re-start.

The computer 100 is configured so that the I/O devices 150 provided in the computer are all used by the front-end OS and operations performed by a user after starting the computer 100 are all executed to the front-end OS. This is effective when starting the computer 100 in the same state each time.

By the aforementioned method, it is possible to start the computer system in the same file system state. However, this does not enable to save information created by using the computer 100. The present invention provides a method to save the information.

The present invention provides a file saving method via a communication device as the first file method for saving a file created on the front-end OS.

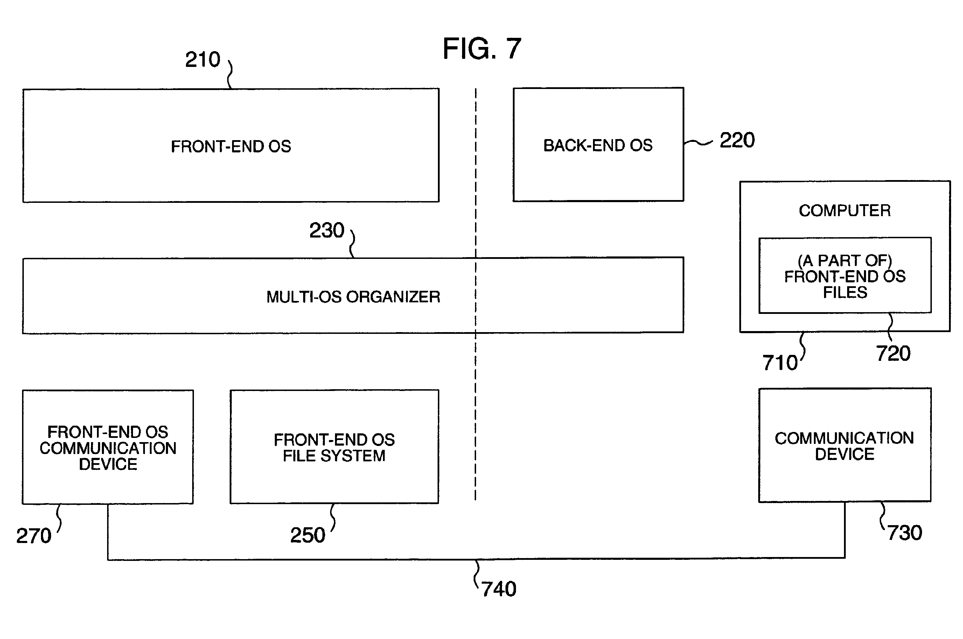

Fig. 7 shows a configuration of the aforementioned computer connected to another external computer.

In Fig. 7, the front-end OS 210 has a communication device 270. Moreover, the external computer 710 has a non-volatile storage 720 and a communication device 730. The communication device 140 of the front-end OS 210 is connected to the communication device 730 of the computer 710 via a communication line 740. The computer 710 provides a function to allow the front-end OS 210 to write a file into a file system created on its non-volatile storage by communication. This is called sharing.

A user of the front-end OS 210 who wants to save a file to be stored without lost can use this sharing function to save the file on the computer 710, so that the file can be stored without initialization even when the front-end OS is restarted.

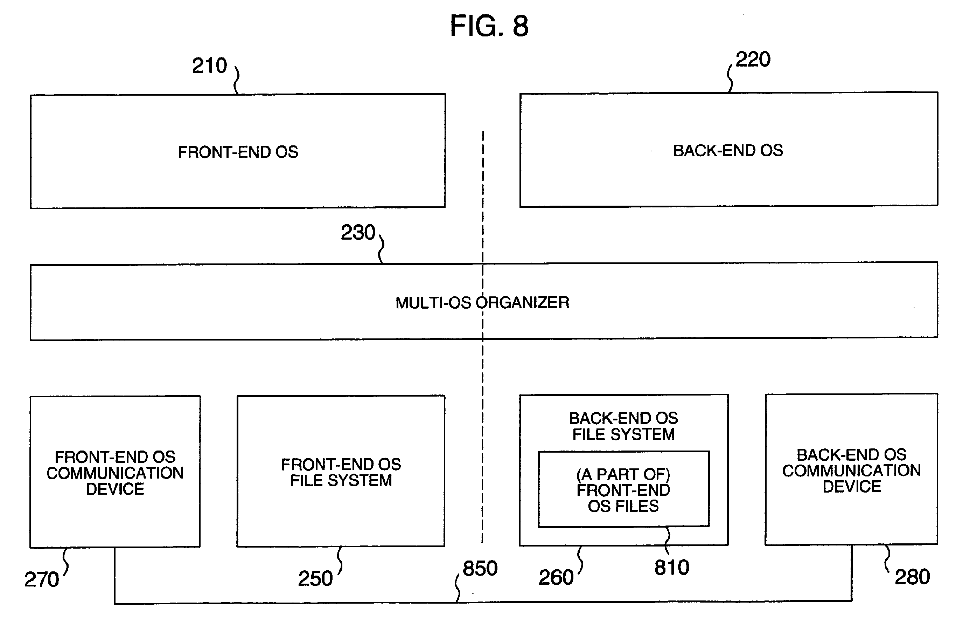

Fig. 8 shows a computer in which the front-end OS 210 has a communication device 270 and the back-end OS 220 has a communication device 280.

Similarly as in Fig. 7, the front-end OS 210 shares a file via the communication device 270. However, in the computer of Fig. 8, the front-end OS 210 communicates with the back-end OS 220 via the communication device 270 and a communication line 850, and files are saves as front-end OS files 810 in the back-end OS file system 260. Thus, only with a single computer, a specified file can be saved while protecting the file system of the front-end OS 210.

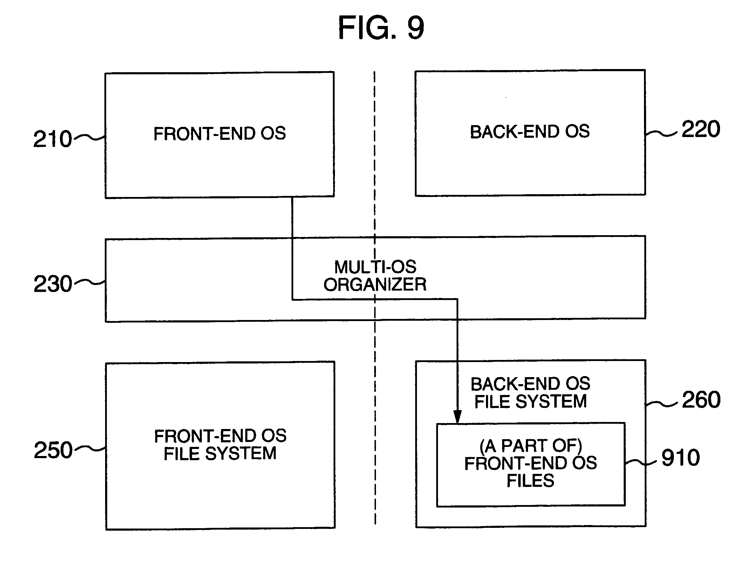

Fig. 9 shows a computer in which the front end OS 210 and the back-end OS 220 have a function for communication via the multi-OS organizer 230.

Similarly as in Fig. 7 and Fig, 8, the front-end OS 210 shares a file via the multi-OS organizer 230. However, in the computer of Fig. 9, the front-end OS 210 communicates with the back-end OS 220 via the multi-OS organizer 230 and files are saved as front-end OS files 910 in the back-end OS file system 260. Thus, with only a single computer, it is possible to store a specified file while protecting the file system of the front-end OS 210 without using any communication device. This method can also be applied to a case where the front-end OS and the back-end OS do not have a function to control the communication device or the function to share a file.

Furthermore, by using the methods of Fig. 8 and Fig. 9, it is possible to constitute a computer system in which the front-end OS file system is partially stored and the front-end OS files 410 of Fig. 5 can also be updated. Thus, it is possible to reflect the entire front-end OS file system updating to the original files contained in the back-end OS file system.

A program to execute the aforementioned file system protection methods of the present invention can be stored in a storage medium that can be read by a computer, so that the program is read in upon execution so as to realize the present invention.

According to the present invention, modifications performed to the file system can be invalidated by a system re-start.

For example, the system having this feature can be applied to a computer for display which may be touched by non-specific people. Modifications performed to the system are invalidated to restore a state in which operation is assured. Thus, the system can be operated in a stable state. Moreover, this system can be used in training for system administration education. Application install, system setting modification, and the like that may generate a system trouble can be performed safely.

Furthermore, modification authorized by an administrator can be stored. Accordingly, data created by a predetermined application by a user can be stored while removing application installed against the indication of the administrator. This enables to significantly lower the operation administration cost of the system administrator.

Moreover, it is also possible to store all the modifications performed to the file system. Accordingly, when a modification which may generate a system trouble is performed, it is possible to completely check the safety before storing the modification.

It will be further understood by those skilled in the art that the foregoing description has been made on embodiments of the invention and that various changes and modifications may be made in the invention without departing from the spirit of the invention and scope of the appended claims.

## Claims

1. A file system protection method used in a computer (100) having a volatile storage (120) and a non-volatile storage (130), and means (230) for simultaneously executing a plurality of operating systems (OS), said method comprising steps of:
copying by a first OS (220), files to be used by a second OS (210) and stored on said non-volatile storage, onto said volatile storage; and
using said copied files to execute said second OS, thereby starting an OS from a file system in a predetermined state each time said system is re-started.

2. The file system protection method as claimed in Claim 1, wherein an OS not having a non-volatile storage stores a file by communicating with an OS having a volatile storage.

3. The file system protection method as claimed in Claim 1, wherein said second OS of said computer has a communication device (270), and when an OS on an external computer having a communication device (730) and a non-volatile storage (720) exchange a file with said second OS via said communication devices, said second OS stores the file on said non-volatile storage of said external computer.

4. The file system protection method as claimed in Claim 1, wherein said first OS and said second OS have communication devices (270, 280) which are connected to each other by a communication line (850), and when exchanging a file via the communication devices, said second OS stores the file on said non-volatile storage of said first OS.

5. The file system protection method as claimed in Claim 1, wherein when said first OS and said second OS exchange a file by communication via said means (230) for simultaneously executing a plurality of OS, the second OS stores the file on said non-volatile storage of said first OS.

6. A file system protection apparatus used in a computer (100) having a volatile storage (120) and a non-volatile storage (130), and means (230) for simultaneously executing a plurality of operating systems (OS), said apparatus comprising:
means for copying by a first OS (220), files to be used by a second OS (210) on said non-volatile storage, onto said volatile storage; and
means for using the copied files to execute said second OS, thereby starting an OS from a file system in a predetermined state each time said system is re-started.

7. A storage medium having a program for executing a file system protection method used in a computer (100) having a volatile storage (120) and a non-volatile storage (130), and means (230) for simultaneously executing a plurality of operating systems (OS), wherein said medium is readable by a computer and said method comprises steps of:
copying, by a first OS (220), files to be used by a second OS (210) on said non-volatile storage, onto said volatile storage; and
using the copied files to execute said second OS, thereby starting an OS from a file system in a predetermined state each time said system is re-started.
